# EUROPEAN PATENT SPECIFICATION

(11) **EP 1 924 811 B1**
(45) Date of publication and mention of the grant of the patent: **29.10.2008**
(21) Application number: 06795715.9
(22) Date of filing: 21.08.2006
(51) Int. Cl.: F25D 17/04, A23L 3/3418

(54) **A COOLING DEVICE**
KÜHLVORRICHTUNG
DISPOSITIF DE REFROIDISSEMENT

(30) Priority: 22.08.2005 TR 200503340
(43) Date of publication of application: 28.05.2008
(73) Proprietor: Arçelik Anonim Sirketi, 34950 Istanbul (TR)
(72) Inventor: AKDAG, Levent, 34950 Istanbul (TR); SEKER, Deniz, 34950 Istanbul (TR); GULDALI, Yalcin, 34950 Istanbul (TR); KANDEMIR, Nihat, 34950 Istanbul (TR)
(86) International application number: PCT/IB2006/052883
(87) International publication number: WO 2007/023443

(56) References cited:
- EP-A1- 0 368 839
- GB-A- 523 779
- JP-A- 7 071 865
- US-A1- 4 961 322
- US-A1- 2006 130 498

## Description

The present invention relates to a cooling device comprising a controlled atmosphere compartment wherein the food products are kept inside a special gas mixture.

There are two primary factors of food deterioration: One of these is the activity of the microorganisms and the other is the continuation of respiration and thus ripening, of particularly the vegetables and fruit after the harvest. Both of these phenomena slow down in low temperatures. Upon this principle, cooling devices have been designed that store food in lower temperatures compared to the exterior environment and hence prolong the shelf life. However, the researches have shown that the oxygen content of the medium is also effective in the deterioration duration of the food. The microorganisms that cause decaying are mostly aerobic bacteria which respire by inhaling oxygen and giving off carbon dioxide and water vapor. Setting off from this point, controlled atmosphere compartments have been devised in the cooling devices, in which particularly the fast spoiling foods are stored, having a gas mixture with a reduced oxygen content (below the 21 % ratio of air) such that the activity of the microorganisms and also the respiration is minimized. In these compartments, there is a gas mixture which is rich in nitrogen or carbon dioxide, with the oxygen level being kept at 3-4 %.

It has also been observed that the humidity of the medium has a considerable effect on the shelf life of food. Below a certain humidity value, the food starts to dehydrate since there is an increase in the discharge of moisture into the medium by diffusion. Furthermore, when the humidity is above a certain value, the humidity in the medium starts to condense on the food, accelerating molding. Therefore, it is of utmost importance to keep the humidity of the medium wherein the food is stored within these two limit values.

In the implementations where the special gas mixture required for the controlled atmosphere compartments is supplied from a tank, the desired amount of water is stored in the tank together with the gas or a humidifier is situated in the compartment to solve the above mentioned problem. However in the implementations wherein the said mixture is supplied by means of a generator that separates the oxygen and other molecules in the air, the generator acts as a kind of "drier" during its operation, resulting in a decrease of the air humidity to below the lower limit. Contrarily, at the intervals when the intermittently operated generator does not operate depending on the oxygen content in the medium, the humidity delivered to the environment from the food by diffusion and respiration goes above the higher limit since the oxygen ratio gradually gets higher.

In the state-of-the-art, the invention described in British Patent no. GB523779, the relative humidity rate of the controlled atmosphere chamber is controlled by a dehumidifier apparatus which is in contact with the atmosphere. In the preferred embodiment, the utilization of a cold plate as a dehumidifier apparatus is stated.

In the United States patent no. US4961322, a refrigerator comprising an atmosphere rich in nitrogen is described. When the humidity level within the refrigerator falls below a first reference value, a humidifier means operates to raise the ambient humidity level. When the humidity level inside is equal to a second reference value, the humidifier means is turned off.

In the European Patent no. EP368839, the description is given for the measurement of humidity in the controlled atmosphere space by a humidity sensor. In this embodiment, a vacuum pump is switched on when an upper limit level is exceeded, and the vacuum pump is switched off when the humidity falls below a lower humidity limit value.

The aim of this invention is the realization of a cooling device in which the humidity level inside a controlled atmosphere compartment is kept within certain limits:

The cooling device realized in order to fulfill the objectives of the present invention is explicated in the attached claims.

In cooling device of the present invention, at least some of the walls of the controlled atmosphere compartment containing a gas mixture rich in nitrogen are produced of a material preferably having a high heat transfer coefficient such that they form a condensation wall. Furthermore, the cooling device comprises an apparatus that cools the condensation wall to a temperature lower than the inner temperature of the compartment. These parts are used when the oxygen level, humidity level and/or the temperature exceed certain limits, providing to condensate the excess humidity of the medium on the condensation wall. Consequently, the condensation of humidity on the foods and triggering the formation of molding are prevented.

In one embodiment of the present invention, the cooling apparatus is operated depending on the temperature and oxygen level within the controlled atmosphere compartment. The reason being that when the ambient 02 content increases, the respiration of the food items and the microorganisms also increase and if the humidity that is formed as a result of this respiration exceeds the limit values, adverse effects on the lifespan of the foodstuffs are observed. Since respiration also means that the heat released into the medium increases, monitoring these two variables together provides for the exact timing for the actuation of the cooling apparatus. Consequently, since the humidity control is performed by the already existing sensors in the controlled atmosphere compartment, the utilization of an additional sensor has been rendered unnecessary.

The condensation wall is positioned on the side surfaces of the controlled atmosphere compartment, preferably on the rear surface so that the condensed water droplets do not drip on the foodstuffs but flow down easily by the effect of the gravity. One side of the surface faces the interior of the controlled atmosphere compartment and the other side faces the inside of the cooling device.

The condensation wall is preferably produced of metal, for example aluminum due to the good thermal transfer characteristics. The other parts of the controlled atmosphere compartment, except the condensation wall, are preferably produced of plastics.

All the surfaces of the controlled atmosphere compartment can be produced of metal depending on the features of the controlled atmosphere compartment and the cooling device inside which it is situated.

It is possible to utilize various devices as a cooling apparatus. To this end, for example in an embodiment of the present invention, the air inside the cooling device is passed over the condensation wall by means of forced circulation, and the humidity in the controlled atmosphere compartment condenses on the interior side of this wall. The fins attached to the wall provide for a better heat transfer by increasing the surface area. A channel is appended, one end of which joins to the inside of the body, for example the freezing compartment, and the other end extends up to the controlled atmosphere compartment, providing to guide the cold air directly on the condensation wall when the air directed towards this wall in the cooling device is insufficient. In an embodiment of the present invention, a fan is appended inside this channel in order to aspirate the air better. In another embodiment of the present invention, the opening of this channel is controlled by a valve, changing the size of the opening of the channel depending on the temperature and the humidity values within the controlled atmosphere compartment.

In another embodiment of the present invention, the condensation wall is cooled by a thermoelectric element, for example a Peltier element. By controlling the current fed to the thermoelectric element, it is possible to control the temperature of the condensation wall effectively.

In yet another embodiment of the present invention, the condensation wall is cooled by a separate evaporator connected in series or in parallel to the evaporator of the cooling device.

The water droplets flowing down by condensing on the condensation wall inside the controlled atmosphere compartment are discharged out of the controlled atmosphere compartment and the cooling device by means of a discharge mechanism.

The cooling device realized in order to fulfill the objectives of the present invention is illustrated in the attached figures, where:

Figure 1 - is the schematic view of a cooling device.

Figure 2 - is the rear perspective view of a controlled atmosphere compartment in an embodiment of the present invention.

Figure 3 - is the front perspective view of a controlled atmosphere compartment in another embodiment of the present invention.

Figure 4 - is the schematic view of another embodiment of the cooling device.

Figure 5 - is the rear perspective view of a controlled atmosphere compartment in another embodiment of the present invention.

Figure 6 - is the schematic view of another embodiment of the cooling device.

Elements shown in the figures are numbered as follows:

1. Cooling device

2. Body

3. Door

4. Fan

5. Valve

6. Controlled atmosphere compartment

7., 8. Sensor

9. Condensation wall

10. , 100., 101., 102. Cooling apparatus

11. Generator

12. Pump

13. Fin

14. Channel

The cooling device (1) comprises:

- a body (2) into which the food products to be cooled are stored,

- at least one door (3) providing access into the body (2),

- a controlled atmosphere compartment (6) situated inside the body (2) containing a gas composition that is different from that of the atmosphere in the body (2),

- a generator (11) that aspirates and extracts air, preparing the required gas mixture to be delivered into the controlled atmosphere compartment (6),

- a pump (12) that provides to deliver the gas mixture supplied by this generator (11) to the controlled atmosphere compartment (6).

The cooling device (1) comprises a condensation wall (9) forming at least some of the walls of the controlled atmosphere compartment (6), one of its sides facing the interior of the controlled atmosphere compartment (6) and the other side facing the exterior of the controlled atmosphere compartment (6), preferably produced of a material having a high thermal transfer coefficient, serving to remove the excess humidity in the controlled atmosphere compartment (6) by being condensed on it.

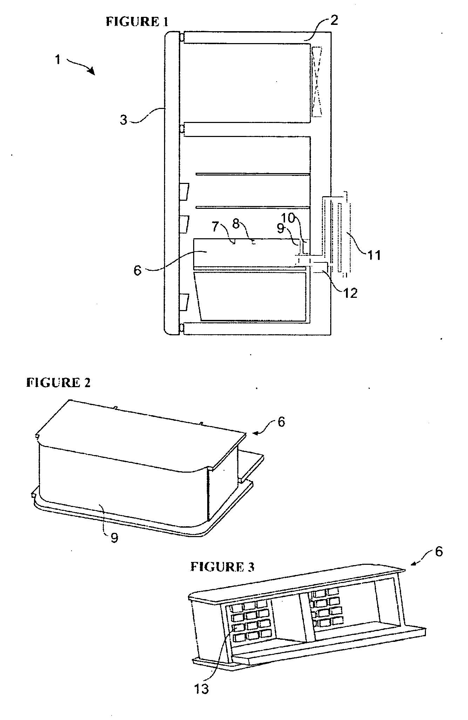

The cooling device (1) comprises at least one sensor (7, 8) for monitoring whether the controlled atmosphere compartment (6) is kept at the required temperature, humidity and oxygen values. Furthermore, the cooling device (1) comprises a cooling apparatus (10, 100, 101, 102) for keeping the humidity level of the controlled atmosphere compartment (6) within the predetermined limit values depending on the measured values, cooling the condensation wall (9) to a temperature that is below the inner temperature of the controlled atmosphere compartment (6) in order to bring the temperature of the condensation wall (9) to a value that allows for the formation of condensation and to keep it at that temperature (Figure 1).

In the cooling device (1) of the present invention, when the sensors (7, 8) in the controlled atmosphere compartment (6) detect that the limit values determined by the manufacturer are exceeded, it is determined that the humidity level has exceeded the desired limits, the cooling apparatus (10) is started and the condensation wall (9) is brought to a temperature lower than that of the controlled atmosphere compartment (6), a temperature that will allow for condensation. For example, if the controlled atmosphere compartment (6) is being kept at a temperature of 4-5°C, the temperature of the condensation wall (9) must be kept within a temperature range of 2-4°C in order to keep the humidity level within the interval of 0.95 - 1.00 in the compartment (6). The excess humidity in the compartment (6) condenses on the inner surface of the condensation wall (9).

In the cooling device (1) of the present invention, preferably a heat sensor (8) and an oxygen sensor (7) are utilized for controlling the humidity level in the controlled atmosphere compartment (6). When the values measured by these two sensors (7, 8) exceed the limit values determined by the producer, it is apprehended that the humidity level in the controlled atmosphere compartment (6) has reached a value that will accelerate the spoilage of food. Accordingly, an indirect measurement of the humidity is achieved by the oxygen and the temperature measurements. Consequently, utilization of a third sensor is not necessary for the measurement of humidity.

In an embodiment of the present invention, the condensation wall (9) is positioned on one of the side surfaces of the controlled atmosphere compartment (6) in order to provide for the trickling down of the water condensed on it.

In another embodiment of the present invention, the condensation wall (9) is produced of metals that have a high thermal transfer coefficient, for example aluminum. The other parts of the controlled atmosphere compartment (6) except the condensation wall (9) is produced of plastics. Since there is a cover at the front side of the controlled atmosphere compartment (6), the condensation wall (9) is preferably positioned at the rear side of it (Figure 2). In this way, it is also provided that, the cooling apparatus (10) positioned near the condensation wall (9) is not seen from the front.

In another embodiment of the present invention, all the surfaces of the controlled atmosphere compartment (6) are produced of metal. Accordingly, all the surfaces of the controlled atmosphere compartment (6) serve as condensation walls (9), and the humidity inside the compartment (6) can be controlled better.

In another embodiment of the present invention, the condensation wall (9) comprises fins (13) in order to increase the heat transfer between itself and the cooling apparatus (10) and/or the inside of the controlled atmosphere compartment (6). These fins (13) are preferably situated on the surface of the condensation wall (9) that faces the interior of the controlled atmosphere compartment (6) (Figure 3).

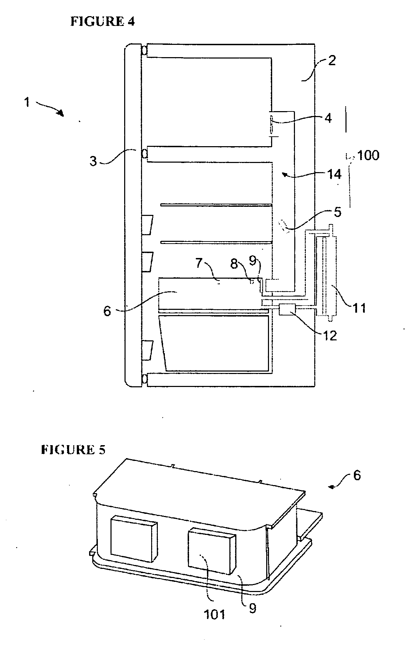

In an embodiment of the present invention, the cooling apparatus (100) comprises a channel (14) that extends from the inside of the body (2) up to just behind the condensation wall (9) and conveys the cold air to the condensation wall (9) (Figure 4). In this embodiment, the cooling apparatus (100) comprises a fan (4) to provide for a better aspiration of the air. In addition to these, the cooling apparatus (100) comprises a shutter (5) for controlling the sectional area of the channel (14) and hence the flow rate of the air blown to the condensation wall (9).

In another embodiment of the present invention, the cooling apparatus (101) is a thermoelectric element. The thermoelectric element, can be for example an element operating with the Peltier effect (Figure 5). Since the temperature of the thermoelectric element changes with the current applied on it, by controlling this current it is possible to control the temperature of the condensation wall (9) in a precise way.

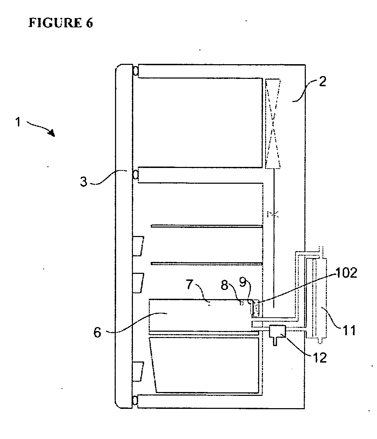

In another embodiment of the present invention, the cooling apparatus (102) is an evaporator (Figure 6). This evaporator can be connected in series or in parallel to the evaporator of the cooling device (1). The effective cooling of the condensation wall (9) is made possible by way of the evaporator directly contacting the condensation wall (9).

By way of the cooling device (1) of the present invention, the humidity level in the controlled atmosphere compartment (6) can always be maintained at the desired value. Since the humidity level inside the controlled atmosphere compartment (6) changes continuously by the respiration, sweating of the food products, and the opening closing of the cover, the constant monitoring of this value provides a contribution for storing of the foods for a longer period of time in the controlled atmosphere compartment (6).

## Claims

1. A cooling device (1) comprising:
- a body (2) into which the food products to be cooled are stored,
- at least one door (3) providing access into the body (2),
- a controlled atmosphere compartment (6) situated inside the body (2) and containing a gas mixture that is different from that of the atmosphere in the body (2),
- a generator (11) that aspirates and extracts the air, preparing the required gas mixture to be delivered into the controlled atmosphere compartment (6),
- a pump (12) that provides to deliver the gas mixture supplied by this generator (11) to the controlled atmosphere compartment (6), and
- at least one sensor (7, 8) that measures the values such as the temperature, humidity rate and the oxygen rate in the controlled atmosphere compartment (6) and **characterized by** a condensation wall (9) forming at least some of the walls of the controlled atmosphere compartment (6), one of its sides facing the interior of the controlled atmosphere compartment (6) and the other side facing the exterior of the controlled atmosphere compartment (6), preferably produced of a material having a high thermal transfer coefficient, serving to remove the excess humidity in the controlled atmosphere compartment (6) by being condensed on it, and
a cooling apparatus (10, 100, 101, 102) for the purpose of keeping the humidity level of the controlled atmosphere compartment (6) within predetermined limit values depending on the values measured by the sensor (7, 8), cooling the condensation wall (9) to a temperature that is below the inner temperature of the controlled atmosphere compartment (6) in order to bring the temperature of the condensation wall (9) to a value that will allow for the formation of condensation and to keep it at that temperature.

2. A cooling device (1) according to Claim 1, **characterized by** two sensors (7, 8), one of which measures the temperature and the other measures the oxygen rate.

3. A cooling device (1) according to Claim 1 or 2, **characterized in that** the condensation wall (9) is positioned on one of the side surfaces of the controlled atmosphere compartment (6).

4. A cooling device (1) according to any one of the above claims, **characterized in that** the condensation wall (9) is produced of metal.

5. A cooling device (1) according to Claim 4, **characterized in that** the condensation wall (9) comprises fins (13).

6. A cooling device (1) according to any one of the above claims, **characterized in that** the cooling apparatus (100) comprises a channel (14) that extends from the body (2) up to just behind the condensation wall (9) and that conveys the cold air in the body (2) up to this wall (9).

7. A cooling device (1) according to Claim 6, **characterized in that** the cooling apparatus (100) comprises a fan (4) for a better aspiration of the air.

8. A cooling device (1) according to Claim 6 or 7, **characterized in that** the cooling apparatus (100) comprises a shutter (5) for controlling the sectional area of the channel (14) and the flow rate of the cold air blown on the condensation wall (9).

9. A cooling device (1) according to any one of the Claims 1 to 5, **characterized in that** the cooling apparatus (101) is a thermoelectric element.

10. A cooling device (1) according to any one of the Claims 1 to 5, **characterized in that** the cooling apparatus (102) is an evaporator contacting the condensation wall (9).

## Patentansprüche

1. Kühleinrichtung (1), umfassend:
- einen Grundkörper (2), in dem zu kühlende Lebensmittelprodukte gelagert werden,
- wenigstens eine Tür (3), die Zugang zum Inneren des Grundkörpers (2) bietet,
- ein Schutzatmosphäre-Fach (6), das im Inneren des Grundkörpers (2) angeordnet ist, und das ein Gasgemisch enthält, welches sich von der Atmosphäre im Grundkörper (2) unterscheidet,
- einen Generator (11), der Luft ansaugt und extrahiert, und das erforderliche Gasgemisch herstellt, das an das Schutzatmosphäre-Fach (6) bereitgestellt wird,
- eine Pumpe (12), die vorsieht, das Gasgemisch, das von dem Generator (11) bereitgestellt wird, an das Schutzatmosphäre-Fach (6) zu leiten, und
- wenigstens einen Sensor (7, 8), der Werte wie Temperatur, relative Luftfeuchtigkeit und Sauerstoffanteil im Schutzatmosphäre-Fach (6) misst, und der **gekennzeichnet ist durch** eine Kondensationswand (9), die wenigstens einige der Wände des Schutzatmosphäre-Fachs (6) bildet, wobei eine ihrer Seiten dem Inneren des Schutzatmosphäre-Fachs (6) zugewandt ist, und die andere Seite dem Äußeren des Schutzatmosphäre-Fachs (6) zugewandt ist, und die vorzugsweise aus einem Material hergestellt ist, das einen hohen Wärmeleitwert aufweist, und die dazu dient, die überschüssige Luftfeuchtigkeit im Schutzatmosphäre-Fach (6) zu entfernen, indem diese an ihr kondensiert, und
eine Kühlvorrichtung (10, 100, 101, 102), die dazu dient, den Pegel der Luftfeuchtigkeit des Schutzatmosphäre-Fachs (6) abhängig von den Werten, die von dem Sensor (7, 8) gemessen werden, innerhalb vorbestimmter Grenzwerte zu halten, und die Kondensationswand (9) auf eine Temperatur abzukühlen, die unter der Innentemperatur des Schutzatmosphäre-Fach (6) liegt, um die Temperatur der Kondensationswand (9) auf einen Wert zu bringen, der eine Bildung von Kondensation zulässt, und sie auf dieser Temperatur zu halten.

2. Kühleinrichtung (1) nach Anspruch 1, **dadurch gekennzeichnet, dass** einer von zwei Sensoren (7, 8) die Temperatur misst und der andere den Sauerstoffanteil misst.

3. Kühleinrichtung (1) nach Anspruch 1 oder 2, **dadurch gekennzeichnet, dass** die Kondensationswand (9) an einer der Seitenflächen des Schutzatmosphäre-Fachs (6) angeordnet ist.

4. Kühleinrichtung (1) nach einem der vorangehenden Ansprüche, **dadurch gekennzeichnet, dass** die Kondensationswand (9) aus Metall hergestellt ist.

5. Kühleinrichtung (1) nach Anspruch 4, **dadurch gekennzeichnet, dass** die Kondensationswand (9) Flossen (13) umfasst.

6. Kühleinrichtung (1) nach einem der vorangehenden Ansprüche, **dadurch gekennzeichnet, dass** die Kühlvorrichtung (100) einen Kanal (14) umfasst, der sich von dem Grundkörper (2) aufwärts bis knapp hinter die Kondensationswand (9) erstreckt, und der die kalte Luft im Grundkörper (2) zu dieser Wand (9) befördert.

7. Kühleinrichtung (1) nach Anspruch 6, **dadurch gekennzeichnet, dass** die Kühlvorrichtung (100) ein Gebläse (4) zum besseren Ansaugen der Luft umfasst.

8. Kühleinrichtung (1) nach Anspruch 6 oder 7, **dadurch gekennzeichnet, dass** die Kühlvorrichtung (100) eine Klappe (5) zum Steuern der Fläche des Kanals (14) und der Strömungsrate der kalten Luft umfasst, die zur Kondensationswand (9) geblasen wird.

9. Kühleinrichtung (1) nach einem der Ansprüche 1 bis 5, **dadurch gekennzeichnet, dass** die Kühlvorrichtung (101) ein thermoelektrisches Element ist.

10. Kühleinrichtung (1) nach einem der Ansprüche 1 bis 5, **dadurch gekennzeichnet, dass** die Kühlvorrichtung (102) ein Verdampfer ist, der in Kontakt mit der Kondensationswand (9) steht.

## Revendications

1. Dispositif de refroidissement (1) comprenant :
- un corps (2) dans lequel les produits alimentaires à refroidir sont mis,
- au moins une porte (3) assurant l'accès au corps (2),
- un compartiment à atmosphère contrôlé (6) situé à l'intérieur du corps (2) et contenant un mélange de gaz différant de celui de l'atmosphère qui se trouve dans le corps (2),
- un groupe électrogène (11) aspirant et extrayant de l'air pour la préparation du mélange de gaz requis à transmettre dans le compartiment à atmosphère contrôlé (6),
- une pompe (12) assurant la transmission du mélange de gaz préparé à l'aide du groupe électrogène (11) vers le compartiment à atmosphère contrôlé (6), et
- au moins un capteur (7, 8) mesurant des valeurs telles que la température, le taux d'humidité et le taux d'oxygène dans le compartiment à atmosphère contrôlé (6), et **caractérisé par** un mur de condensation (9) formant au moins certains murs du compartiment à atmosphère contrôlé (6), un de ses côtés donnant sur l'intérieur du compartiment à atmosphère contrôlé (6) et l'autre côté donnant sur l'extérieur du compartiment à atmosphère contrôlé (6), de préférence fait d'un matériau ayant un haut coefficient de transmission thermale, pour retirer l'excès d'humidité dans le compartiment à atmosphère contrôlé (6) en étant condensé sur celui-ci, et un appareil de refroidissement (10, 100, 101, 102) dans le but de garder le niveau d'humidité du compartiment à atmosphère contrôlé (6) dans lequel des valeurs limites prédéterminées dépendent des valeurs mesurées par le capteur (7, 8), et dans celui de refroidir le mur de condensation (9) jusqu'à une température qui serait inférieure à la température intérieure du compartiment à atmosphère contrôlé (6) pour amener la température du mur de condensation (9) à une valeur qui permettrait la condensation et qui le garderait à cette température.

2. Dispositif de refroidissement (1) selon la Revendication 1 **caractérisé par** deux capteurs (7, 8), dont l'un mesure la température et l'autre mesure le taux d'oxygène.

3. Dispositif de refroidissement (1) selon la Revendication 1 ou 2 **caractérisé en ce que** le mur de condensation (9) est placé sur l'une des surfaces de côté du compartiment à atmosphère contrôlé (6).

4. Dispositif de refroidissement (1) selon l'une quelconque des revendications précédentes **caractérisé en ce que** le mur de condensation (9) est fait de métal.

5. Dispositif de refroidissement (1) selon la Revendication 4 **caractérisé en ce que** le mur de condensation (9) comprend des saillies (13).

6. Dispositif de refroidissement (1) selon l'une quelconque des revendications précédentes **caractérisé en ce que** l'appareil de refroidissement (100) comprend un canal (14) qui s'étend depuis le corps (2) jusque derrière le mur de condensation (9) et qui transmet l'air froid dans le corps (2) jusqu'à ce mur (9).

7. Dispositif de refroidissement (1) selon la Revendication 6 **caractérisé en ce que** l'appareil de refroidissement (100) comprend un ventilateur (4) pour l'aspiration meilleure de l'air.

8. Dispositif de refroidissement (1) selon la Revendication 6 ou 7 **caractérisé en ce que** l'appareil de refroidissement (100) comprend une obturation (5) pour contrôler l'espace en coupe du canal (14) et le taux de flux de l'air froid circulant sur le mur de condensation (9).

9. Dispositif de refroidissement (1) selon l'une quelconque des Revendications de 1 à 5, **caractérisé en ce que** l'appareil de refroidissement (101) est un élément thermoélectrique.

10. Dispositif de refroidissement (1) selon l'une quelconque des Revendications de 1 à 5, **caractérisé en ce que** l'appareil de refroidissement (102) est un évaporateur en contact avec le mur de condensation (9).
